# EUROPEAN PATENT SPECIFICATION

(11) **EP 0 970 421 B1**
(45) Date of publication and mention of the grant of the patent: **03.01.2007**
(21) Application number: 98917010.5
(22) Date of filing: 19.03.1998
(51) Int. Cl.: G06F 9/44, G06F 9/445, G06Q 10/00

(54) **METHOD AND PROGRAM MODULE FOR THE CONFIGURATION OF A DEVICE**
VERFAHREN UND PROGRAMMMODUL ZUM KONFIGURIEREN EINER VORRICHTUNG
PROCEDE ET MODULE DE PROGRAMME SERVANT A EFFECTUER LA CONFIGURATION D'UNE UNITE

(30) Priority: 26.03.1997 EP 97105170
(43) Date of publication of application: 12.01.2000
(73) Proprietor: TELEFONAKTIEBOLAGET LM ERICSSON (publ), 164 83 Stockholm (SE)
(72) Inventor: RENSCHLER, Martin, D-52074 Aachen (DE)
(74) Representative: Mohsler, Gabriele
(86) International application number: PCT/EP1998/001603
(87) International publication number: WO 1998/043160

(56) References cited:
- EP-A- 0 369 934
- US-A- 5 339 432
- BRYAN M. KRAMER: "KNOWLEDGE-BASED CONFIGURATION OF COMPUTER SYSTEMS USING HIERARCHICAL PARTIAL CHOICE" PROCEEDINGS OF THE INTERNATIONAL CONFERENCE ON TOOLS FOR ARTIFICIAL INTELLIGENCE, no. 3, 5 - 8 November 1991, pages 368-375, XP000333429 INSTITUTE OF ELECTRICAL AND ELECTRONICS ENGINEERS, SAN JOSE
- CHAPTER 4: "CMOS Configuration and Utilities" TURBOPROCESSOR SYSTEM UPGRADE MODEL 60/80 INSTALLATION AND REFERENCE MANUAL, June 1993, pages 4.1-4.29, XP002037975 REPLY CORPORATION, SAN JOSE, CA, US
- MARKUS STUMPTNER ET AL.: "COCOS - A TOOL FOR CONSTRAINT-BASED, DYNAMIC CONFIGURATION" PROCEEDINGS OF THE CONFERENCE ON ARTIFICIAL INTELLIGENCE FOR APPLICATIONS, no. 10, 1 - 4 March 1994, pages 373-380, XP000479472 INSTITUTE OF ELECTRICAL AND ELECTRONICS ENGINEERS, SAN ANTONIO

## Description

The invention relates to a method and a program module for configuring a device having a plurality of parameters, whereby the parameters are dependent on each other.

In the prior art a configuration expert system becomes increasingly important, as tools to ensure that delivered systems are workable. Therefore, a hierarchical partial choice that effectively generates configurations from a knowledge base of structured descriptions of computer components. As described so-called constraints are defined. With a system described herein, a component is selected to satisfy the constraints in order to execute a goal. An executed goal may lead to the fact that possibly new constraints are generated. Here newly posted constraints may be attached to goals either by finding an existing goal or finding a goal that is compatible or by creating a new goal. This leads to the fact that it is allowed to describe components of a goal independently of other components and yet results in configurations where one component is chosen to satisfy multiple requirements.

If no components satisfy the constraints attached to a goal a contradiction is implied and the choice is undone. Undoing the choice has the effect of removing a constraint from the failed goal potentially allowing a choice to be made there. When there are several components that might satisfy a goal, it is attempted to find a constraint that these components have in common ("Knowledge-based Configuration of Computer Systems Using Hierarchical Partial Choice"; by: Kramer et al; IEEE; Int. Conference On Tools for Artificial Intelligence; San Jose; November, 91)

Therefore if a device is newly configured, new values are allocated to different parameters of the device. This can, for example, be done manually. Frequently the different parameters are linked to each other in a way that they are dependent on each other by equations, provisions, rules etc. This means that a parameter dependent on another parameter cannot be changed arbitrarily because a rule might possibly be infringed thereby.

With an increasing number of parameters dependent on each other, also the difficulties in providing a new configuration increase.

Accordingly it is the object of the invention to provide a method and a program module for the configuration of a device in a way that the configuration of parameters being dependent on each other and thus the change of a value of a parameter is facilitated by simultaneously providing support for obtaining an optimal and admissible configuration.

According to the invention this object is provided by the teaching of patent claim 1 and patent claim 5.

It is an advantageous aspect of the invention that the values of the parameters can be changed by a user one after the other in an optionally selected order, whereby it can be seen at any time during the change whether the change is admissible by simultaneously determining an optimal configuration.

It is, moreover, an advantageous aspect that by means of displaying the admissible and inadmissible values of a parameter the user immediately obtains information thereon during the configuration, whereby malfunctioning configurations can be avoided.

The method can particularly advantageously be used for the configuration of radio base stations and for the configuration of graphics cards. Accordingly such a method is used in connection with parameters linked to each other.

Additional advantageous embodiments can be inferred from subclaims 2 to 4 and 6 to 7.

According to patent claim 2 it is particularly advantageous that admissible values for parameters are additionally displayed, to which parameters a value has already been permanently allocated. This increases the provision of an optimal configuration or a desired configuration, since such a review subsequently enables an even better determination of the individual parameters determined previously.

It is equally advantageous according to patent claim 3 that also inadmissible values can be selected, whereby it is indicated simultaneously with the selection of an inadmissible value which changes have to be made for converting the selection into an admissible one. This increases the flexibility of a new configuration in an advantageous manner.

According to patent claim 4 it proves to be advantageous that the sequence of the changes of parameter values is determined, whereby a conclusion can be drawn on the relevance of the individual parameters for thereby proposing changes in a way that the less relevant ones are changed first, whereby it is assumed that the parameters determined first are the most relevant ones.

In the following the invention is explained in more detail by means of embodiments and the figures: The following figures show:
- Fig. 1:: a timing diagram of the inventive method for configuration,
- Fig. 2:: a schematic illustration of an embodiment for the configuration of a radio base station.

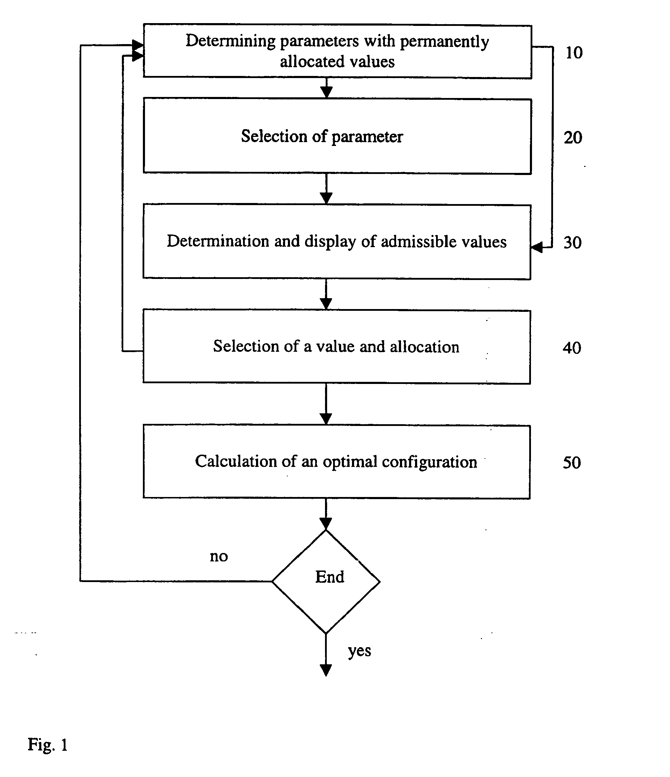

the method according to the invention is hereinafter explained in more detail by means of figure 1.

In a method for configuring a device having a plurality of parameters, the different parameters each have a different status. There are parameters which cannot be changed, i.e. they can only be read. Other parameters are either in a status where a value has been permanently allocated to them, or where no value has been permanently allocated to them. The latter are hereinafter called free ones. Said parameters can, therefore, be read and written.

For obtaining a new configuration all those parameters are considered that are free or to which a fixed value has been allocated. The remaining parameters which can only be read have to remain unchanged and are adopted for a new configuration without changes. The parameters to which a fixed value has been allocated and the free parameters are considered for the new configuration. By determining a fixed value a fixed parameter can be formed out of a free parameter. Also, a parameter having a fixed value can be converted to a free parameter. This is, for example, user-defined and depends on the input.

For example, each fixed value of a parameter can first be converted into a "free" status, or the fixed value remains allocated to a specific number of parameters. Said status is determined in a first step 10. In a second step 20 one of the parameters is selected for being changed. Preferably such a parameter is one that has no fixed value allocated to it. In a further step 30 it is determined and displayed which values are admissible for the selected parameter. This is determined in connection with the parameters and with the already fixed values. This is explained in more detail by means on an embodiment in the description below.

In a next step 40 one of the values is selected and permanently allocated to the parameter. Preferably admissible values are selected, however, there still is the possibility to select and permanently allocate an inadmissible value, whereby it is additionally displayed which changes of other parameters having fixed values have to be made for turning the configuration into an admissible and functioning configuration.

In another embodiment it can equally be displayed when displaying the admissible values for a parameter as to which changes are admissible for the already fixed parameters. This can, for example, result in an even better configuration.

In the further process of the method according to the invention an optimal configuration for the remaining free parameters is calculated in a step 50. In the case where the configuration seems optimal, the process can be stopped. If the configuration is not yet in conformity with the desired one, again those parameters are determined to which a fixed value is being allocated. As an alternative this can also be noted and entered in the selection and allocation of a value according to step 40.

The invention is hereinafter explained in more detail by means of an embodiment (without figure) with regard to the configuration of a graphics card.

In this case three parameters for providing a configuration are required. One parameter indicates the definition, another parameter the repeat rate and a third parameter indicates the number of colors. Assuming that the following is an admissible and functioning configuration - a definition of 800x600, a repeat rate of 72 Hz and the number of colors 256 - it is desired to maintain the definition and to increase the repeat rate up to 76 Hz. If the parameter of the number of colors does not yet have a fixed value such a configuration works because said parameter is calculated in view of the other parameters already having fixed values in a manner, so as to obtain an optimal and thus admissible configuration. Accordingly the number of colors would be set at 16. If the number of colors, however, is also adjusted to a fixed value, such as 256, the selection of the repeat rate of 72 Hz is marked an inadmissible one. If the repeat frequency of 72 Hz is still selected, it will be displayed that the number of colors has to be changed for producing a functioning configuration. In this case again the alternatives are displayed.

With the desired change of such a configuration it is generally assumed that the parameter appearing to be the most essential one is adjusted first. This is, for example, the definition of 800x600. If the repeat frequency is adjusted next, for example, to 76 Hz and it is desired thereupon to adjust the number of colors to 256, the change of the repeat frequency will be suggested first for solving said configuration, since said repeat frequency had been changed last and only after the definition had been adjusted. In this respect it is assumed that the first input is the most important one, which is why a less important parameter is proposed for the change first.

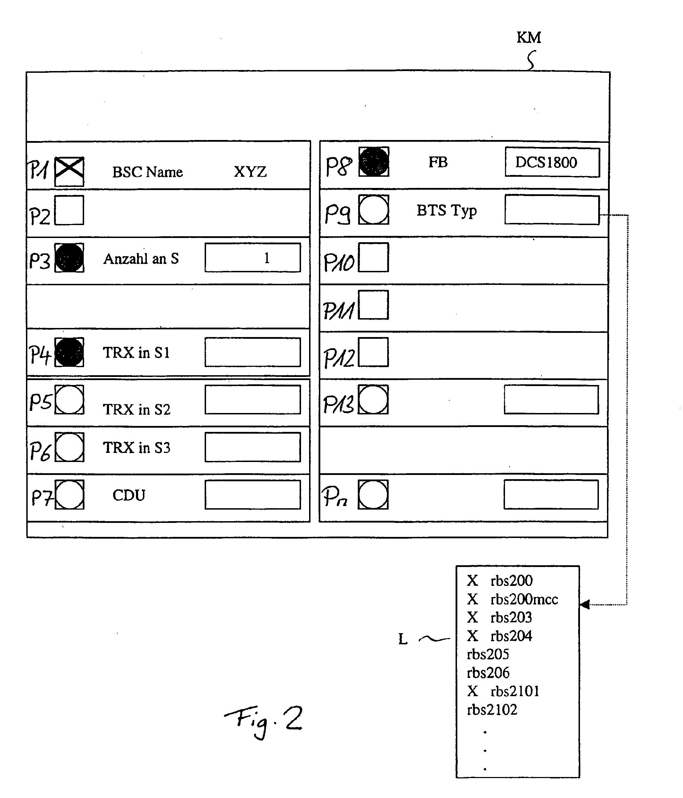

Another embodiment according to figure 2 is explained in the following, whereby the configuration of a radio base station is concerned.

For configuring a radio base station, for example, a configuration menu KM is used. Such a configuration menu KM comprises a plurality of parameters P1, ...,Pn. The parameters are either parameters P1 being read only, which is marked by a cross, or parameters P3, P4, P8, to which a fixed value has already been allocated, which is marked by a black circle, or parameters P5, P6, P7, P13, Pn, to which no value has been permanently allocated, i.e. free parameters being marked by a white circle. In addition free sections P10, P11, P12 are available, which have not been included for the sake of getting a better view.

In the present example the unchangeable parameter P1 indicates the name of the radio base station control device BSC-name. As another parameter, to which a fixed values has already been allocated, parameter P8 indicates the selected frequency band FB. This can, for example, be DCS 1800, GSM or any other one. In the present case, DCS 1800 was chosen and fixed as a value. Parameter P3 indicates the number of sectors S. The number was set at 1. Parameter P4 indicates the number of transceiver TRX in the first sector S1. Said number was set at value 3. Parameter P7 indicating a control and display unit CDU is indicated as a parameter without a fixed value. Further parameters P13 and Pn have not been specified in more detail for the sake of getting a better view.
In the illustrated example a selection is to be made for parameter P9 which indicates the type of the base transmitting /receiving station BTS-type. The parameter is still free. If a fixed value is now to be allocated to said parameter, a list L containing all possible base transmitting/receiving stations BTS-type is read-out. Those types the values of which entail an inadmissible configuration are marked and indicated by an X in list L. All other admissible values are indicated without an X and are, thus, freely selectable. If an optional value is now selected, it can permanently be allocated to the parameter, which is indicated by the illustration of a black circle.

In the following the program module according to the invention for configuring a device is explained in more detail (without figure).

A program module according to the invention comprises first means for determining a status of the parameters. The status of a parameter indicates whether it can only be read, whether it is free or whether it is fixed.

As second means the program module comprises means for determining admissible values for a parameter to be changed in dependence on the status of the additional parameters. Accordingly, the parameters to which a value has already been permanently allocated are being used for the determination, i.e. for calculating admissible values. The parameters which can only be read are equally used for the calculation.

Further means for calculating an optimal configuration of the parameters in dependence on the status determine the optimal configuration for the free parameters, which can then, for example, be occupied automatically.

Moreover, the program module comprises third means for determining admissible values for parameters already having permanently allocated values. This serves the further optimization, whereby also the already fixed parameters can further contribute to the optimization.

Additional fourth means for determining admissible values for parameters in the selection of an inadmissible configuration serve the selection also of an inadmissible value, whereby then a proposal for providing an admissible configuration is determined and displayed simultaneously

## Claims

1. Method for configuring a device having a plurality of parameters,
wherein
- one parameter is selected for the change,
- admissible values for changing the parameters in dependence on parameters having permanently allocated values are determined and displayed,
- a value is selected for the parameter and permanently allocated thereto,
- additional parameters, to which no value is permanently allocated, are calculated in view of the other parameters having permanently allocated values, so as to obtain an optimal and thus admissible configuration.

2. Method according to claim 1,
wherein
it is additionally displayed which further admissible values for parameters having permanently allocated values are available.

3. Method according to claim 1 or 2,
wherein
admissible and inadmissible values can be selected for the parameter by displaying in case of selection of an inadmissible value which change is required for obtaining an admissible configuration.

4. Method according to claim 3,
wherein
the order of change of the parameters is determined and wherein, when selecting the inadmissible value, the required changes are displayed in the order so as to change the last changes first.

5. Program module for configuring a device having a plurality of parameters, comprising
- first means for determining a status of the parameters,
- second means for determining admissible values for a parameter to be changed in dependence on the status of additional parameters,
- additional means for calculating an optimal configuration of the parameters
in dependence on the status.

6. Program module according to claim 5, comprising third means for determining admissible values for parameters already having permanently allocated values.

7. Program module according to claim 5 or 6, comprising fourth means for determining admissible values for parameters when selecting an inadmissible configuration.

8. Use of the method according to claim 1 for configuring a radio base station.

9. Use of the method according to claim 1 for configuring a graphics card.

## Patentansprüche

1. Verfahren zum Konfigurieren eines Gerätes mit mehreren Parametern, wobei
- ein Parameter für die Änderung ausgewählt wird,
- zulässige Werte zum Ändern der Parameter in Abhängigkeit von Parametern, die dauerhaft zugewiesene Werte haben, bestimmt und angezeigt werden,
- ein Wert für den Parameter gewählt und ihm dauerhaft zugewiesen wird,
- zusätzliche Parameter, welchen kein Wert dauerhaft zugewiesen ist, im Hinblick auf die anderen Parameter, die dauerhaft zugewiesene Werte haben, berechnet werden, derart, dass eine optimale und somit zulässige Konfiguration erhalten wird.

2. Verfahren nach Anspruch 1, wobei
zusätzlich angezeigt wird, welche weiteren zulässigen Werte für Parameter, die dauerhaft zugewiesene Werte haben, zulässig sind.

3. Verfahren nach Anspruch 1 oder 2, wobei
zulässige und unzulässige Werte für den Parameter gewählt werden können, wobei im Falle der Wahl eines unzulässigen Wertes angezeigt wird, welche Änderung erforderlich ist, um eine zulässige Konfiguration zu erhalten.

4. Verfahren nach Anspruch 3, wobei
die Reihenfolge der Änderung der Parameter bestimmt wird und wobei, wenn der unzulässige Wert gewählt wird, die erforderlichen Änderungen in einer solchen Reihenfolge angezeigt werden, dass die letzten Änderungen zuerst geändert werden.

5. Programmmodul zum Konfigurieren eines Gerätes mit mehreren Parametern, welches umfasst
- erste Mittel zum Bestimmen eines Status der Parameter,
- zweite Mittel zum Bestimmen zulässiger Werte für einen zu ändernden Parameter in Abhängigkeit vom Status zusätzlicher Parameter,
- zusätzliche Mittel zum Berechnen einer optimalen Konfiguration der Parameter in Abhängigkeit vom Status.

6. Programmmodul nach Anspruch 5, welches dritte Mittel zum Bestimmen zulässiger Werte für Parameter umfasst, die bereits dauerhaft zugewiesene Werte haben.

7. Programmmodul nach Anspruch 5 oder 6, welches vierte Mittel zum Bestimmen zulässiger Werte für Parameter umfasst, wenn eine unzulässige Konfiguration gewählt wird.

8. Anwendung des Verfahrens nach Anspruch 1 zum Konfigurieren einer Funk-Basisstation.

9. Anwendung des Verfahrens nach Anspruch 1 zum Konfigurieren einer Graphikkarte.

## Revendications

1. Procédé pour configurer un dispositif ayant une pluralité de paramètres, dans lequel
- un paramètre est sélectionné afin d'être modifié,
- des valeurs admissibles pour modifier les paramètres en fonction des paramètres auxquels des valeurs sont allouées de manière permanente sont déterminées et affichées,
- une valeur est sélectionnée pour le paramètre et lui est allouée de manière permanente,
- des paramètres additionnels, auxquels aucune valeur n'est allouée de manière permanente, sont calculés dans la perspective des autres paramètres auxquels des valeurs sont allouées de manière permanente, de manière à obtenir une configuration optimale et donc admissible.

2. Procédé selon la revendication 1, dans lequel
il est affiché en supplément quelles autres valeurs admissibles sont disponibles pour les paramètres auxquels des valeurs sont allouées de manière permanente.

3. Procédé selon la revendication 1 ou 2, dans lequel
des valeurs admissibles et inadmissibles peuvent être sélectionnées pour les paramètres en affichant en cas de sélection d'une valeur inadmissible quelle modification est requise afin d'obtenir une configuration admissible.

4. Procédé selon la revendication 3, dans lequel
l'ordre de modification des paramètres est déterminé et dans lequel, lorsque la valeur inadmissible est sélectionnée, les modifications requises sont affichées dans l'ordre de manière à modifier d'abord les dernières modifications.

5. Module de programme pour configurer un dispositif ayant une pluralité de paramètres, comprenant
- un premier moyen pour déterminer un statut des paramètres,
- un second moyen pour déterminer des valeurs admissibles d'un paramètre à modifier en fonction du statut des paramètres additionnels,
- un moyen additionnel pour calculer une configuration optimale des paramètres en fonction du statut.

6. Module de programme selon la revendication 5, comprenant un troisième moyen pour déterminer des valeurs admissibles pour les paramètres auxquels des valeurs sont déjà allouées de manière permanente.

7. Module de programme selon la revendication 5 ou 6, comprenant un quatrième moyen pour déterminer des valeurs admissibles pour des paramètres lorsqu'une configuration inadmissible est sélectionnée.

8. Utilisation du procédé selon la revendication 1 pour configurer une station de base radio.

9. Utilisation du procédé selon la revendication 1 pour configurer une carte graphique.
